# EUROPEAN PATENT APPLICATION

(11) **EP 3 438 534 A1**
(43) Date of publication of application: **06.02.2019**
(21) Application number: 17775196.3
(22) Date of filing: 29.03.2017
(51) Int. Cl.: F23G 5/46, F22B 1/18, F22B 37/10, F22G 3/00

(54) **STOKER-TYPE GARBAGE INCINERATOR PROVIDED WITH WASTE HEAT RECOVERY BOILER**

(30) Priority: 31.03.2016 JP 2016070045
(71) Applicant: Hitachi Zosen Corporation, Osaka-shi, Osaka 559-8559 (JP)
(72) Inventor: MINAMI, Kazuhiko, Suminoe-ku Osaka-shi Osaka 5598559 (JP); KATSUKI, Makoto, Suminoe-ku Osaka-shi Osaka 5598559 (JP); HARADA, Hiroki, Suminoe-ku Osaka-shi Osaka 5598559 (JP); NAGAMORI, Toshio, Suminoe-ku Osaka-shi Osaka 5598559 (JP); ITOH, Hanako, Suminoe-ku Osaka-shi Osaka 5598559 (JP)
(74) Representative: Grünecker Patent- und Rechtsanwälte PartG mbB
(86) International application number: PCT/JP2017/012849
(87) International publication number: WO 2017/170661

(57) **Abstract**

A stoker-type waste incinerator provided with a waste heat recovery boiler. The stoker-type waste incinerator has formed therein a combustion chamber, a first flue, a top turn-back part (31), and a second flue (22), and the incinerator is provided with a partition wall (44) and a ceiling wall (45, 46). The waste heat recovery boiler has a final-stage superheater (57) comprising a plurality of double pipes (82). The plurality of double pipes (82) pass through a portion (46) of the ceiling wall (45, 46) positioned above the second flue (22), and are suspended in the vertical direction. Each double pipe (82) has an inner pipe (83) for transmitting steam, and an outer pipe (84) surrounding the outside of the inner pipe (83) and transmitting steam in the opposite direction from the inner pipe (83). The outer pipe (84) has a curved bottom part at the bottom end to send back the steam transmitted to the bottom end thereof. The partition wall (44) blocks direct radial heat from the combustion chamber so that the radial heat does not reach the final-stage superheater (57).

## Description

### Technical Field

The present invention relates to a stoker-type waste incinerator provided with a waste heat recovery boiler that recovers heat from exhaust gas generated by combustion of waste.

### Background Art

Patent Literature 1 discloses a waste incinerator with a boiler that generates high-temperature and high-pressure steam on the order of 500°C and 100 atg (about 9.8 MPaG).

In the waste incinerator with the boiler, saturated steam collected in a steam drum is transmitted to a primary superheater constituting a wall surface of a main combustion chamber, and then the steam is transmitted to a secondary superheater and the subsequent superheaters that are disposed in the space of the main combustion chamber, thereby generating high-temperature and high-pressure superheated steam.

Patent Literature 1 describes that all the superheaters have resistance to corrosion at high temperatures and are lined with refractory materials having high thermal conductivity, thereby enduring continuous use up to an atmospheric gas temperature of 1200°C while generating steam at about 500°C.

### Citation List

### Patent Literature

Patent Literature 1: Japanese Patent Laid-Open No. 6-82005

### Summary of Invention

### Technical Problem

Generally, a superheater for superheating steam through heat exchange with exhaust gas is disposed downstream of a flue to which exhaust gas is guided. In the downstream area of the flue, exhaust gas is guided at low temperatures and has small fluctuations in temperature.

However, the main combustion chamber including the superheaters described in Patent Literature 1 is a space for burning waste, and thus the main combustion chamber has extremely large temperature fluctuations and directly radiates heat to the superheaters from combustion fire. This makes it difficult to generate steam at stable temperatures and pressures in the superheaters. Patent Literature 1 does not describe the details of the superheaters. In a typical superheater, an unbalanced load is applied to a serpentine pipe or the like and thus may cause deformation leading to damage or burning. This makes it difficult to achieve a long life.

An object of the present invention is to provide a stoker-type waste incinerator provided with a waste heat recovery boiler that can generate steam at stable temperatures and pressures and achieve a long life.

### Solution to Problem

In order to solve the problem, a stoker-type waste incinerator provided with a waste heat recovery boiler according to a first invention, wherein,
the stoker-type waste incinerator has formed therein: a combustion chamber where waste is burned and unburned exhaust gas generated in combustion of the waste is also burned; a first flue that upwardly guides exhaust gas generated by the combustion in the combustion chamber; a top turn-back part that downwardly guides exhaust gas guided upward from the first flue; and a second flue that downwardly guides exhaust gas from the top turn-back part,
the stoker-type waste incinerator includes: a partition wall partitioning the first flue and the second flue; and a ceiling wall that defines the upper end of the top turn-back part,
the waste heat recovery boiler includes a superheater that is provided in the upper part of the second flue in the top turn-back part and includes a plurality of double pipes for superheating steam through heat exchange with the exhaust gas,
the plurality of double pipes pass through a portion of the ceiling wall above the second flue, and are suspended in the vertical direction,
each of the plurality of double pipes has an inner pipe for transmitting the steam, and an outer pipe surrounding the outside of the inner pipe and transmitting steam in the opposite direction from the inner pipe, and
the outer pipe has a closed part at the bottom end to send back the steam transmitted to the bottom end thereof, and
wherein the partition wall blocks direct radial heat caused by the combustion in the combustion chamber so that the radial heat does not reach the superheater.

A stoker-type waste incinerator provided with a waste heat recovery boiler according to a second invention, in which the superheater in the stoker-type waste incinerator provided with the waste heat recovery boiler according to the first invention includes a plurality of comb-like pipe columns disposed on a surface perpendicular to predetermined surfaces, each of the comb-like pipe columns including the plurality of double pipes arranged in parallel on one of the predetermined surfaces,
the double pipe includes a longitudinally connecting pipe that connects the inner pipe/outer pipe of the double pipe adjacent to the outer pipe/inner pipe of the double pipe in the same comb-like pipe columns, and
the longitudinally connecting pipe is disposed above the ceiling wall.

A stoker-type waste incinerator provided with a waste heat recovery boiler according to a third invention, in which the double pipe in the stoker-type waste incinerator provided with the waste heat recovery boiler according to the first or second invention has a heat-resistant corrosion-resistant layer at least on a portion of the outer pipe positioned on the top turn-back part, and
the heat-resistant corrosion-resistant layer is formed by thermally spraying heat-resistant and corrosion-resistant metals or ceramics or padding of heat-resistant and corrosion-resistant metals.

Additionally, a stoker-type waste incinerator provided with a waste heat recovery boiler according to a fourth invention, in the stoker-type waste incinerator provided with the waste heat recovery boiler according to the first or second invention,
the stoker-type waste incinerator has formed therein: a lower turn-back part that upwardly guides exhaust gas guided downward from the second flue; and a third flue that upwardly guides exhaust gas from the lower turn-back part,
the waste heat recovery boiler further includes a first-stage superheater disposed in the third flue, and
the first-stage superheater superheats steam through heat exchange with exhaust gas in the third flue and transmits the steam to the superheater including the plurality of double pipes.

A stoker-type waste incinerator provided with a waste heat recovery boiler according to a fifth invention, in the stoker-type waste incinerator provided with the waste heat recovery boiler according to the first or second invention,
the stoker-type waste incinerator has formed therein: a lower turn-back part that upwardly guides exhaust gas guided downward from the second flue; and a third flue that upwardly guides exhaust gas from the lower turn-back part,
the waste heat recovery boiler further includes a first-stage superheater disposed in the upper part of the third flue and a middle-stage superheater disposed in the lower part of the third flue or in the second flue,
the first-stage superheater superheats steam through heat exchange with exhaust gas in the upper part of the third flue and transmits the steam to the middle-stage superheater, and
the middle-stage superheater heats steam through heat exchange with exhaust gas in the lower part the third flue or the second flue and transmits the steam to the superheater including the plurality of double pipes.

### Advantageous Effects of Invention

According to the stoker-type waste incinerator provided with the waste heat recovery boiler, the partition wall blocks direct radial heat caused by combustion in the combustion chamber prior to the superheater. In this way, temperature fluctuations are reduced at the position of the superheater, achieving steam at a stable temperature and pressure in the superheater. Moreover, in the superheater, the double pipes are suspended in the vertical direction while being held in the upper part, thereby suppressing the occurrence of an unbalanced load, e.g., a bending moment at a position exposed to exhaust gas. This prevents damage or burning caused by deformation, achieving a long life. Furthermore, in the superheater, the inner pipe and the outer pipe of the double pipe are not extended in the horizontal direction, and thus are not used as scaffolding during maintenance, achieving a longer life.

### Brief Description of Drawings

[FIG. 1] FIG. 1 is a schematic diagram showing a stoker-type waste incinerator provided with a waste heat recovery boiler according to a first embodiment of the present invention.
[FIG. 2] FIG. 2 is a side view showing a first-stage superheater and a middle-stage superheater in the waste heat recovery boiler.
[FIG. 3] FIG. 3 is a side view showing comb-like pipe columns of double pipes in the final-stage superheater of the waste heat recovery boiler.
[FIG. 4] FIG. 4 is a cross-sectional view showing the frontmost double pipe and the adjacent double pipe in the comb-like pipe columns.
[FIG. 5] FIG. 5 is a cross-sectional view showing a modification of FIG. 4.
[FIG. 6] FIG. 6 is a schematic diagram showing a stoker-type waste incinerator provided with a waste heat recovery boiler according to a second embodiment of the present invention.

### Description of Embodiments

### [First Embodiment]

A stoker-type waste incinerator provided with a waste heat recovery boiler according to a first embodiment of the present invention will be described below with reference to the accompanying drawings.

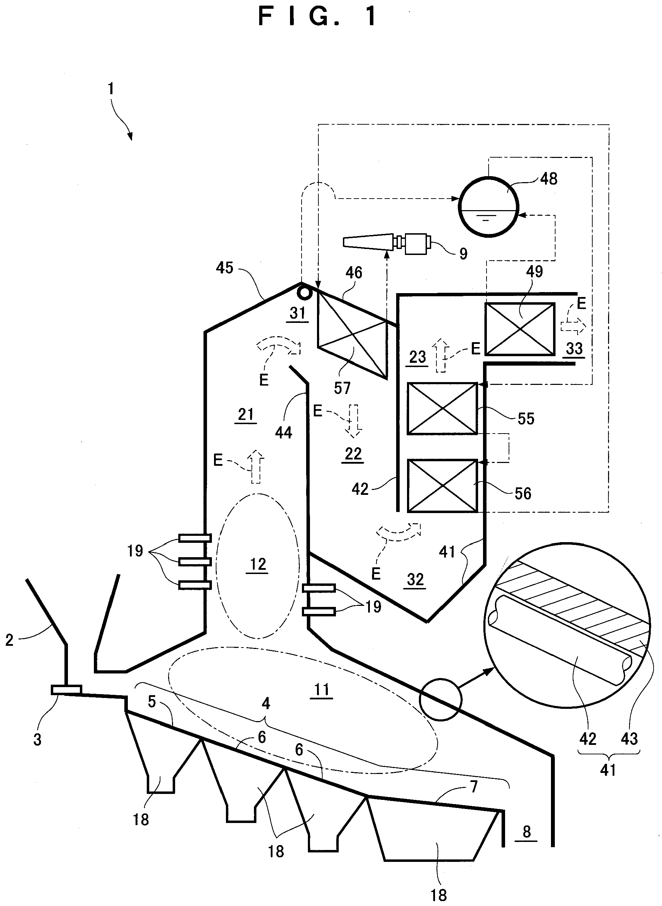

Referring to FIG. 1, the basic configuration of the stoker-type waste incinerator will be first discussed below. Hereinafter, the left direction in the drawings will be referred to as a forward direction, the right direction in the drawings will be referred to as a rearward direction, and a direction from the near side to the far side in the drawings will be referred to as a lateral direction.

### [The basic configuration of the stoker-type waste incinerator]

As shown in FIG. 1, the stoker-type waste incinerator includes a hopper 2 where waste is dropped, a pusher 3 that delivers dropped waste in the hopper 2 rearward, a furnace bed 4 where waste delivered by the pusher 3 is further delivered rearward while being burned on the furnace bed 4, and a discharge opening 8 from which waste incinerated on the furnace bed 4 is discharged. The furnace bed 4 includes, sequentially from the upstream side (forward side) of waste, drying fire grates 5 for drying waste, combustion fire grates 6 for burning waste, and post-combustion fire grates 7 for incinerating waste.

The stoker-type waste incinerator 1 has formed therein a primary combustion chamber 11 that is disposed above the furnace bed 4 and allows combustion of waste, and a secondary combustion chamber 12 that is disposed above the primary combustion chamber 11 and allows combustion of unburned exhaust gas generated in the combustion of waste. The stoker-type waste incinerator 1 further includes wind boxes 18 that are disposed under the furnace bed 4 and supply primary combustion air into the primary combustion chamber 11, and air nozzles 19 that are disposed at the front and rear sides of the secondary combustion chamber 12 and supply secondary combustion air into the secondary combustion chamber 12. Hereinafter, the primary combustion chamber 11 and the secondary combustion chamber 12 may be collectively referred to as combustion chambers 11 and 12.

### [Exhaust gas passages 21 to 23, 31 to 33]

As shown in FIG. 1, the stoker-type waste incinerator 1 has formed therein exhaust gas passages 21 to 23 and 31 to 33 for guiding exhaust gas E generated in the combustion chambers 11 and 12 and discharging the exhaust gas E to the outside. The exhaust gas passages 21 to 23 and 31 to 33 deliver the exhaust gas E rearward while vertically transferring the exhaust gas E. In other words, the stoker-type waste incinerator 1 is an integral-type incinerator that is longitudinally reduced in size. The exhaust gas passages 21 to 23 and 31 to 33 include, sequentially from the upstream side of the exhaust gas E, an upright first flue 21 that guides the exhaust gas E upward from the secondary combustion chamber 12, a top turn-back part 31 that guides the upward exhaust gas E downward, an upright second flue 22 that guides the exhaust gas E downward, a lower turn-back part 32 that guides the downward exhaust gas E upward, an upright third flue 23 that guides the exhaust gas E upward again, and a horizontal tail duct part 33 that discharges the upward exhaust gas E rearward.

The waste heat recovery boiler provided in the stoker-type waste incinerator 1 will be specifically discussed below.

### [Waste heat recovery boiler]

As shown in FIG. 1, the waste heat recovery boiler includes a water wall 41 surrounding the combustion chambers 11 and 12 and the exhaust gas passages 21 to 23 and 31 to 33. The water wall 41 is an adiabatic wall 43 along which a fin water pipe 42 extends. Circulating water is supplied into the fin water pipe 42 of the water wall 41 so as to absorb the heat of the combustion chambers 11 and 12 or the exhaust gas passages 21 to 23 and 31 to 33, thereby preventing an excessive temperature increase of the adiabatic wall 43.

The waste heat recovery boiler includes a steam drum 48 that receives circulating water from the inside of the fin water pipe 42, an exhaust gas economizer 49 that is disposed in the tail duct part 33 and preheats boiler feedwater to be supplied to the steam drum 48, and superheater units 55 to 57 (will be specifically discussed later) that further heat the steam of the steam drum 48 into high-temperature and high-pressure steam. The stoker-type waste incinerator 1 further includes a steam turbine 9 that receives high-temperature and high-pressure steam from the superheater units 55 to 57. The water wall 41 includes ceiling walls 45 and 46 that define the upper end of the top turn-back part 31 and a partition wall 44 that is a partition between the first flue 21 and the second flue 22. The ceiling walls 45 and 46 include a front ceiling wall 45 disposed immediately above the first flue 21 and a rear ceiling wall 46 disposed immediately above the second flue 22. The partition wall 44 is formed to protect the final-stage superheater 57 (constituting the superheater units 55 to 57, which will be specifically discussed later), which is provided on the rear ceiling wall 46, from direct heat radiation caused by combustion in the secondary combustion chamber 12. For example, the partition wall 44 (particularly its upper end) is positioned and shaped so as to completely block a space linearly connecting the final-stage superheater 57 and fire caused by combustion in the secondary combustion chamber 12. The partition wall 44 is made of refractory materials for protecting the fin water pipe 42 and other water pipes.

### [Superheater units 55 to 57]

As shown in FIG. 1, the superheater units 55 to 57 include, sequentially from the upstream side of steam from the steam drum 48, a first-stage superheater 55 disposed in the upper part of the third flue 23, a middle-stage superheater 56 disposed in the lower part of the third flue 23, and a final-stage superheater 57 provided on the rear ceiling wall 46, in order to further heat steam from the steam drum 48 into high-temperature and high-pressure steam. Hereinafter, the outside of a space surrounded by the water wall 41 will be referred to as an external space.

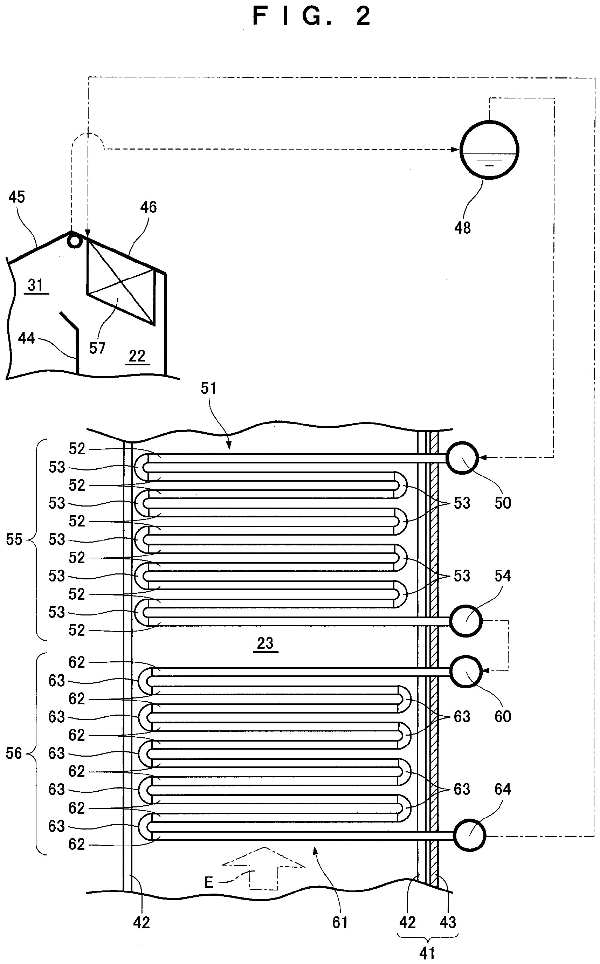

As shown in FIG. 2, the first-stage superheater 55 includes a first-stage inlet header pipe 50 connected to the steam drum 48, a first-stage horizontal serpentine pipe 51 that extends downward while serpentining in the longitudinal (or lateral) direction, and a first-stage outlet header pipe 54 connected to the downstream end of the first-stage horizontal serpentine pipe 51. The first-stage inlet header pipe 50 and the first-stage outlet header pipe 54 are both extended in the horizontal direction perpendicular to the first-stage horizontal serpentine pipe 51 in the external space. Only the single first-stage horizontal serpentine pipe 51 is illustrated but in an actual configuration, the multiple first-stage horizontal serpentine pipes 51 are provided from the near side to the far side in FIG. 2. All the first-stage horizontal serpentine pipes 51 are connected upstream to the first-stage inlet header pipe 50 and are connected downstream to the first-stage outlet header pipe 54. Each of the first-stage horizontal serpentine pipes 51 includes multiple horizontal straight pipe parts 52 that are vertically arranged in parallel and U-shaped pipe parts 53 that alternately connect the horizontal straight pipe parts 52, which are vertically adjacent to each other, on the front ends or the rear ends.

The middle-stage superheater 56 includes a middle-stage inlet header pipe 60 connected to the first-stage outlet header pipe 54, a middle-stage horizontal serpentine pipe 61 that extends downward while serpentine in the longitudinal (or lateral) direction, and a middle-stage outlet header pipe 64 connected to the downstream end of the middle-stage horizontal serpentine pipe 61. The middle-stage inlet header pipe 60 and the middle-stage outlet header pipe 64 are both extended in the horizontal direction perpendicular to the middle-stage horizontal serpentine pipe 61 in the external space. Only the single middle-stage horizontal serpentine pipe 61 is illustrated but in an actual configuration, the multiple middle-stage horizontal serpentine pipes 61 are provided from the near side to the far side in FIG. 2. All the middle-stage horizontal serpentine pipes 61 are connected upstream to the middle-stage inlet header pipe 60 and are connected downstream to the middle-stage outlet header pipe 64. Each of the middle-stage horizontal serpentine pipe 61 includes multiple horizontal straight pipe parts 62 that are vertically arranged in parallel and U-shaped pipe parts 63 that alternately connect the horizontal straight pipe parts 62, which are vertically adjacent to each other, on the front ends or the rear ends. In FIG. 2, the first-stage horizontal serpentine pipe · 51 and the middle-stage horizontal serpentine pipe 61 include the horizontal straight pipe parts 52 and 62 and the U-shaped pipe parts 53 and 63 such that the horizontal straight pipes and the U-shaped pipe parts are connected to each other. A long pipe may be bent and used instead.

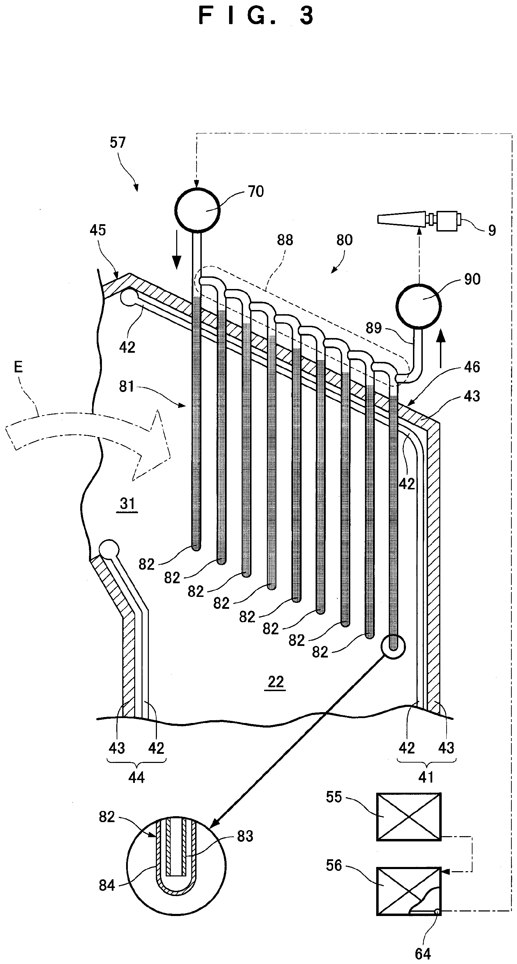

As shown in FIG. 3, the final-stage superheater 57 includes a high-temperature inlet header pipe 70 connected to the middle-stage outlet header pipe 64 of the middle-stage superheater 56, a pipe cluster 80 including pipes 82 extended in the vertical direction through the rear ceiling wall 46 (specifically, the adiabatic wall 43 of the rear ceiling wall 46), and a high-temperature outlet header pipe 90 connected to the pipe cluster 80. The pipe 82 constituting the pipe cluster 80 is a double pipe 82 including an inner pipe 83 and an outer pipe 84. Thus, hereinafter the pipe cluster 80 will be referred to as a double pipe cluster 80 and the pipe 82 constituting the double pipe cluster 80 will be referred to as the double pipe 82. The double pipes 82 (e.g., 9 double pipes in FIG. 3) longitudinally arranged in parallel constitute comb-like pipe columns 81 in the side view of FIG. 3. The double pipe cluster 80 includes the laterally arranged comb-like pipe columns 81, and thus is shaped like a brush when viewed from the top turn-back part 31. In the double pipe cluster 80, the longitudinally adjacent double pipes 82 are connected to each other at least in the same comb-like pipe columns 81. In the different comb-like pipe columns 81, the laterally adjacent double pipes 82 may be connected or unconnected to each other. The double pipes 82 constituting the double pipe cluster 80 are all extended in the vertical direction with the top portions held by the fin water pipe 42 of the rear ceiling wall 46, so that the double pipes 82 are substantially suspended from the rear ceiling wall 46. Predetermined intervals between the adjacent double pipes 82 in the longitudinal and lateral direction are optionally set so as to efficiently exchange heat between steam transmitted into the double pipe cluster 80 and the exhaust gas E passing through a gap between the double pipes 82.

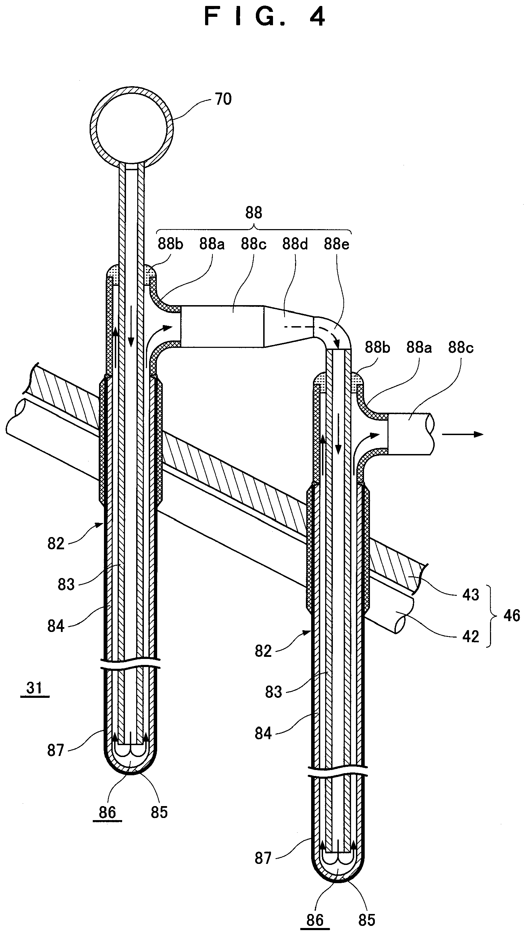

As shown in FIG. 4, each of the double pipes 82 includes the inner pipe 83 where steam is transmitted downward, the outer pipe 84 that surrounds the outside of the inner pipe 83, and a longitudinally connecting pipe 88 that is connected to the rear of the outer pipe 84 above the rear ceiling wall 46. The double pipe 82 disposed rearmost does not have the longitudinally connecting pipe 88 but has a delivery pipe 89 (refer to FIG. 3) connecting the outer pipe 84 and the high-temperature outlet header pipe 90.

As shown in FIG. 4, the upper end of the inner pipe 83 is connected to the longitudinally connecting pipe 88 in the immediately-facing double pipe 82, and the lower end of the inner pipe 83 communicates with the lower end part of the outer pipe 84. The upper end of the inner pipe 83 of the double pipe 82 at the front end is not connected to the longitudinally connecting pipe 88 but is directly connected to the high-temperature inlet header pipe 70. The upper end part of the outer pipe 84 is held by the fin water pipe 42 of the rear ceiling wall 46. The outer pipe 84 has a curved bottom part 85 (an example of a closed part) for closing the lower end of the outer pipe 84. Inside of the bottom end part of the outer pipe 84 and the curved bottom part 85, a steam turn-back part 86 is formed as a space where steam transmitted downward from the lower end of the inner pipe 83 is sent back upward. The longitudinally connecting pipe 88 includes, sequentially from the upstream side of steam, a T-pipe 88a having the lower end attached to the upper end of the outer pipe 84, a short pipe 88c attached to the rear end of the T-pipe 88a, a taper pipe 88d attached to the rear end of the short pipe 88c, and an elbow pipe 88e attached to the rear end of the taper pipe 88d. On the upper end of the T-pipe 88a, the outer periphery of the inner pipe 83 is sealed with a padding part 88b. In the longitudinally connecting pipe 88, the rear end of T-pipe 88a, the short pipe 88c, and the taper pipe 88d are extended in the horizontal direction, and the elbow pipe 88e is bent from the horizontal direction to the vertical direction and is connected to the upper end of the inner pipe 83 in the double pipe 82 immediately behind the elbow pipe 88e. Thus, the passage of steam in the double pipe 82 includes, sequentially from the upstream side of steam, the inside of the inner pipe 83 where steam transmitted from the longitudinally connecting pipe 88 (or the high-temperature inlet header pipe 70) being immediately frontward the inner pipe 83 is transmitted downward, the steam turn-back part 86, the inside of the outer pipe 84 and the outside of the inner pipe 83 where steam from the steam turn-back part 86 is transmitted upward, and the inside of the longitudinally connecting pipe 88 (or the delivery pipe 89 in FIG. 3) that transmits steam from the upper end of the outer pipe 84 into the double pipe 82 immediately behind the outer pipe 84.

Description will now be made to how the final-stage superheater 57 (specifically, the outer pipe 84) is protected from the high-temperature and corrosive exhaust gas E passing through the top turn-back part 31.

As shown in FIG. 4, in the double pipe 82, a part of the outer pipe 84 held by the rear ceiling wall 46 and a part of the outer pipe 84 below the rear ceiling wall 46 are exposed to the corrosive exhaust gas E at high temperatures, resulting in susceptibility to the exhaust gas E. Thus, the double pipe 82 includes a heat-resistant corrosion-resistant layer 87 as a protective layer that covers the part of the outer pipe 84 held by the rear ceiling wall 46 and the part of the outer pipe 84 below the rear ceiling wall 46. The heat-resistant corrosion-resistant layer 87 is formed by thermally spraying heat-resistant and corrosion-resistant metals or ceramics. Alternatively, the heat-resistant corrosion-resistant layer 87 may be formed by padding of heat-resistant and corrosion-resistant metals. The heat-resistant corrosion-resistant layer 87 formed thus covers the outer pipe 84 so as to protect the pipe from the high-temperature and corrosive exhaust gas E for an extended period of time. In a typical method of forming a protective layer by thermal spraying, a distance between an object (substrate) and a thermal spraying nozzle is kept constant; meanwhile, the thermal spraying nozzle is moved to spray a material (thermal spray material) for the protective layer to the substrate from the thermal spraying nozzle. In this method, as long as the thermal sprayed surface of the object to be thermally sprayed is circular or gently curved (preferably hemispherical) about the axis of a straight line, a distance between the surface of the object and the moving thermal spraying nozzle can be easily kept constant, thereby forming an even protective layer on the surface. Conversely, the outer surface of a bent part of a serpentine pipe (U-shaped pipe part) used for a typical boiler is circular around the axis of a curve, making it difficult to keep a constant distance between the pipe and a thermal spraying nozzle. This forms an uneven protective layer by thermal spraying on the outer surface of the U-shaped pipe. In contrast, the outer surface (where the heat-resistant corrosion-resistant layer is formed) of the curved bottom part 85 of the outer pipe 84 in the first embodiment is gently curved (or hemispherical), thereby an even heat-resistant corrosion-resistant layer is formed by thermal spraying. Moreover, the outer surface of the outer pipe 84 to be formed with the heat-resistant corrosion-resistant layer other than the curved bottom part 85 is circular around the axis of a straight line, thereby an even heat-resistant corrosion-resistant layer is formed by thermal spraying. Thus, the heat-resistant corrosion-resistant layers 87 are all evenly formed on the outer surfaces of the outer pipes 84 by thermal spraying, so that a crack, local peeling, and local thinning are hardly caused by a thermal shock or the like.

The effects of the stoker-type waste incinerator 1 provided with the waste heat recovery boiler will be discussed below.

As shown in FIG. 1, waste dropped into the hopper 2 is delivered rearward by the pusher 3 and reaches the furnace bed 4. Above the furnace bed 4 (i.e., in the primary combustion chamber 11), waste is burned by primary combustion air from the wind boxes 18. The waste is further delivered rearward by the drying fire grates 5, the combustion fire grates 6, and the post-combustion fire grates 7 that constitute the furnace bed 4. The waste is burned into ash and then is discharged from the discharge opening 8. In the secondary combustion chamber 12, unburned exhaust gas generated by the combustion of waste is further burned into the exhaust gas E by secondary combustion air from the air nozzles 19. The exhaust gas E generated by combustion in the combustion, chambers 11 and 12 is guided to the exhaust gas passages 21 to 23 and 31 to 33 and then is discharged to the outside of the stoker-type waste incinerator 1 so as to pass through a purifier or the like (not shown). Finally, the exhaust gas E is released from a chimney (not shown) into the atmosphere.

Heat generated by the combustion of waste and the heat of the exhaust gas E guided to the exhaust gas passages 21 to 23 and 31 to 33 are collected into circulating water in the steam drum 48 by the water wall 41. The circulating water of the steam drum 48 is further superheated into high-temperature and high-pressure steam by the superheater units 55 to 57. Specifically, the first-stage superheater 55 exchanges heat between steam and the exhaust gas E guided to the upper part of the third flue 23, the middle-stage superheater 56 exchanges heat between steam and the exhaust gas E at a higher temperature guided to the lower part of the third flue 23, and the final-stage superheater 57 exchanges heat between steam and the exhaust gas E at quite a high temperature guided to the top turn-back part 31. In the final-stage superheater 57, heat is exchanged with the exhaust gas E at quite a high temperature but only the heat-resistant corrosion-resistant layers 87 shown in FIG. 4 are exposed to the exhaust gas E. As described above, a crack, local peeling, and local thinning are hardly caused by a thermal shock or the like on the heat-resistant corrosion-resistant layer 87, thereby the heat-resistant corrosion-resistant layer 87 continuously protects the outer pipe 84 even if the heat-resistant corrosion-resistant layer 87 is continuously exposed to the corrosive exhaust gas E at high temperatures.

As shown in FIG. 1, high-temperature and high-pressure steam obtained from the final-stage superheater 57 is transmitted to the steam turbine 9, and then the thermal energy of steam is usably collected by the steam turbine 9.

As described above, according to the stoker-type waste incinerator 1 provided with the waste heat recovery boiler, the partition wall 44 blocks direct radial heat caused by combustion in the secondary combustion chamber 12 to the final-stage superheater 57. In this way, temperature fluctuations are reduced at the position of the final-stage superheater 57, achieving steam at a stable temperature and pressure in the final-stage superheater 57. Moreover, the final-stage superheater 57 includes the double pipes 82 that are suspended in the vertical direction while being held in the upper part, thereby suppressing the occurrence of an unbalanced load, e.g., a bending moment at a position exposed to the exhaust gas E. This prevents damage or burning caused by deformation, achieving a long life. Furthermore, in the final-stage superheater 57, the inner pipe 83 and the outer pipe 84 of the double pipe 82 are not extended in horizontal direction, and thus are not used as scaffolding during maintenance, achieving a longer life.

Additionally, the heat-resistant corrosion-resistant layer 87 continuously protects the outer pipe 84 even if the heat-resistant corrosion-resistant layer 87 is continuous exposed to the corrosive exhaust gas E at high temperatures, achieving a long life.

The longitudinally connecting pipe 88 can smoothly loop back steam in the double pipe 82 with the simple configuration including the inner pipe 83 and the outer pipe 84. Furthermore, the longitudinally connecting pipe 88 disposed in the external space can be easily removed from the outer pipe 84. Since at this time the inner pipe 83 can be removed from the outer pipe 84, maintenance in the final-stage superheater 57 can be facilitated.

Since the first-stage superheater 55 is disposed in the third flue 23 where the exhaust gas E has a relatively low temperature, steam preheated by the first-stage superheater 55 is transmitted to the final-stage superheater 57. Thus, high-temperature and high-pressure steam can be satisfactorily generated in the final-stage superheater 57.

Since the middle-stage superheater 56 is disposed in the third flue 23 upstream of the first-stage superheater 55 with respect to the exhaust gas E, steam preheated by the first-stage superheater 55 is superheated in the middle-stage superheater 56 and then is transmitted to the final-stage superheater 57. Thus, high-temperature and high-pressure steam can be more satisfactorily generated in the final-stage superheater 57.

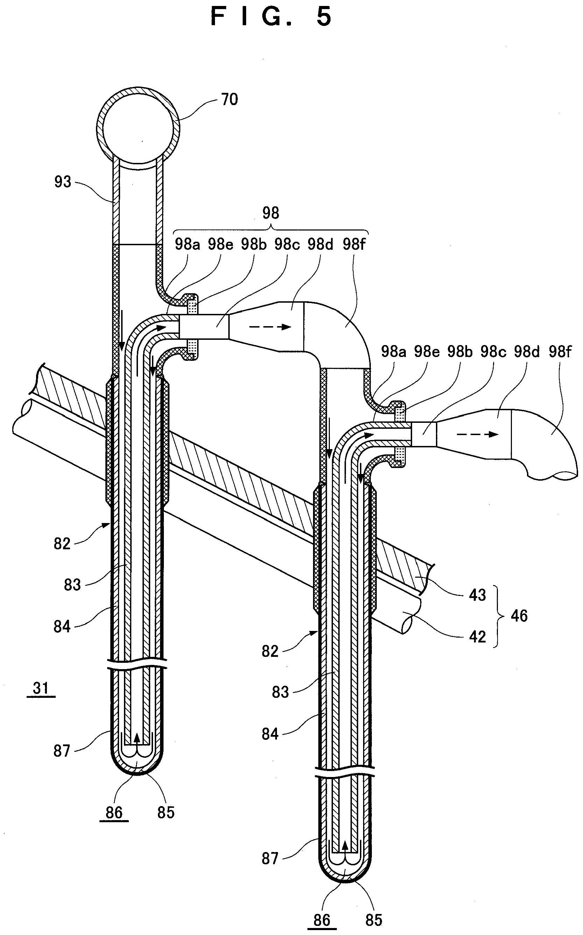

In the first embodiment, as shown in FIG. 4, steam sequentially passes through the inner pipe 83, the outer pipe 84, and the longitudinally connecting pipe 88. Although, as shown in FIG. 5, steam may sequentially pass through the outer pipe 84, the inner pipe 83, and the longitudinally connecting pipe 98. Specifically, the longitudinally connecting pipe 98 in FIG. 5 includes, sequentially from the upstream side of steam, a T-pipe 98a where steam is transmitted from the upper end and a sealing part 98b seals the outer periphery of a short pipe 98c, which will be discussed later, an elbow pipe 98e connected to the upper end of the inner pipe 83, a short pipe 98c attached to the rear end of the elbow pipe 98e, a taper pipe 98d attached to the rear end of the short pipe 98c, and a large elbow pipe 98f attached to the rear end of the taper pipe 98d and has the lower end connected to the upper end of the outer pipe 84 immediately behind the large elbow pipe 98f. Furthermore, the longitudinally connecting pipe 98 of the frontmost double pipe 82 has the upper end connected to the high-temperature inlet header pipe 70 via a pipe 93. On the other hand, the double pipe 82 disposed rearmost does not have the longitudinally connecting pipe 98 but has the delivery pipe 89 connecting the upper end of the inner pipe 83 and the high-temperature outlet header pipe 90, which is not shown in FIG. 5.

In the first embodiment, the final-stage superheater 57 transmits steam from the front to the rear (in a direction that guide the exhaust gas E). Alternatively, steam may be transmitted from the rear to the front.

### [Second Embodiment]

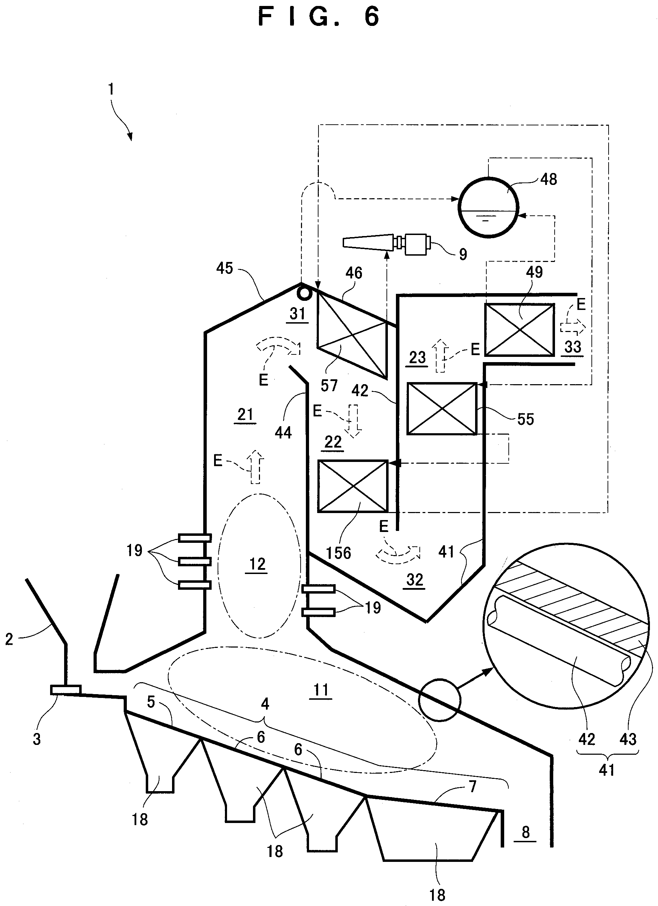

Referring to FIG. 6, a stoker-type waste incinerator provided with a waste heat recovery boiler according to a second embodiment of the present invention will be described below.

As shown in FIG. 6, the stoker-type waste incinerator 1 provided with the waste heat recovery boiler according to the second embodiment includes superheater units 55, 156, and 57. Unlike in the first embodiment, the middle-stage superheater 156 is disposed in a second flue 22 instead of a third flue 23. In the following description, the same configurations as those of the first embodiment are indicated by the same reference numerals, and the explanation thereof is omitted.

The middle-stage superheater 156 according to the second embodiment is exposed to more corrosive exhaust gas E at higher temperatures as compared with the middle-stage superheater 156 according to the first embodiment. Thus, the middle-stage superheater 156 according to the second embodiment includes a protective layer (not shown) having the same property as a heat-resistant corrosion-resistant layer 87 of the final-stage superheater 57. Moreover, a middle-stage horizontal serpentine pipe 61 in the middle-stage superheater 156 has a U-shaped pipe part 63 disposed in the external space, because in the U-shaped pipe part 63, the heat-resistant corrosion-resistant layer 87 is hardly formed with uniformity. Specifically, a horizontal straight pipe part 62 in the middle-stage superheater 56 is so long as to pass through an adiabatic wall 43 of a lateral water wall 41 that defines the right and left ends of the second flue 22. On the horizontal straight pipe parts 62, the middle-stage horizontal serpentine pipe 61 has a heat-resistant corrosion-resistant layer as a protective layer in a portion passing through the adiabatic wall 43 and a portion positioned in the second flue 22. The outer surface of the horizontal straight pipe part 62 to be formed with the heat-resistant corrosion-resistant layer is circular around the axis of a straight line, thereby an even heat-resistant corrosion-resistant layer is formed by thermal spraying. Specifically, the middle-stage superheater 156 according to the second embodiment is exposed to the more corrosive exhaust gas E at higher temperatures as compared with the middle-stage superheater 56 according to the first embodiment but the exposed portion is evenly covered with the heat-resistant corrosion-resistant layer. The first-stage superheater 55 of the second embodiment may be disposed in the upper part of the third flue 23 (refer to FIG. 6) as in the first embodiment or may be disposed in the middle or lower part of the third flue 23. The first-stage superheater 55 in the middle or lower part is not shown.

In the stoker-type waste incinerator 1 provided with the waste heat recovery boiler according to the second embodiment, further superheated steam is transmitted from the middle-stage superheater 156 to the final-stage superheater 57 unlike in the first embodiment. Thus, high-temperature and high-pressure steam can be quite satisfactorily generated in the final-stage superheater 57.

The first and second embodiments are merely exemplary and are not restrictive in all the aspects. The scope of the present invention is not indicated by the foregoing description but the claims. The scope of the present invention is intended to include meanings equivalent to the claims and all changes in the scope. Among the configurations described in the first and second embodiments, the configurations other than that described as the first invention in [Solution to Problem] are optional and thus can be deleted and changed as appropriate.

## Claims

1. A stoker-type waste incinerator provided with a waste heat recovery boiler, wherein
the stoker-type waste incinerator has formed therein: a combustion chamber where waste is burned and unburned exhaust gas generated in combustion of the waste is also burned; a first flue that upwardly guides exhaust gas generated by the combustion in the combustion chamber; a top turn-back part that downwardly guides exhaust gas guided upward from the first flue; and a second flue that downwardly guides exhaust gas from the top turn-back part,
the stoker-type waste incinerator comprises: a partition wall partitioning the first flue and the second flue; and a ceiling wall that defines an upper end of the top turn-back part,
the waste heat recovery boiler includes a superheater that is provided in the upper part of the second flue in the top turn-back part and includes a plurality of double pipes for superheating steam through heat exchange with the exhaust gas,
the plurality of double pipes pass through a portion of the ceiling wall above the second flue, and are vertically suspended,
each of the plurality of double pipes has an inner pipe for transmitting the steam, and an outer pipe surrounding the outside of the inner pipe and transmitting the steam in an opposite direction from the inner pipe, and
the outer pipe has a closed part at a bottom end to send back the steam transmitted to the bottom end thereof, and
wherein the partition wall blocks direct radial heat caused by the combustion in the combustion chamber so that the radial heat does not reach the superheater.

2. The stoker-type waste incinerator provided with the waste heat recovery boiler according to claim 1, wherein
the superheater includes a plurality of comb-like pipe columns disposed on a surface perpendicular to predetermined surfaces, each of the comb-like pipe columns including the plurality of double pipes arranged in parallel on one of the predetermined surfaces,
the double pipe includes a longitudinally connecting pipe that connects the inner pipe/outer pipe of the double pipe adjacent to the outer pipe/inner pipe of the double pipe in the same comb-like pipe columns, and
the longitudinally connecting pipe is disposed above the ceiling wall.

3. The stoker-type waste incinerator provided with the waste heat recovery boiler according to claim 1 or 2, wherein
the double pipe has a heat-resistant corrosion-resistant layer at least on a portion of the outer pipe positioned on the top turn-back part, and
the heat-resistant corrosion-resistant layer is formed by thermally spraying heat-resistant and corrosion-resistant metals or ceramics or padding of heat-resistant and corrosion-resistant metals.

4. The stoker-type waste incinerator provided with the waste heat recovery boiler according to claim 1 or 2, wherein
the stoker-type waste incinerator has formed therein: a lower turn-back part that upwardly guides exhaust gas guided downward from the second flue; and a third flue that upwardly guides exhaust gas from the lower turn-back part,
the waste heat recovery boiler further includes a first-stage superheater disposed in the third flue, and
the first-stage superheater superheats steam through heat exchange with exhaust gas in the third flue and transmits the steam to the superheater including the plurality of double pipes.

5. The stoker-type waste incinerator provided with the waste heat recovery boiler according to claim 1 or 2, wherein
the stoker-type waste incinerator has formed therein: a lower turn-back part that upwardly guides exhaust gas guided downward from the second flue; and a third flue that upwardly guides exhaust gas from the lower turn-back part,
the waste heat recovery boiler further includes a first-stage superheater disposed in the upper part of the third flue and a middle-stage superheater disposed in the lower part of the third flue or in the second flue,
the first-stage superheater superheats steam through heat exchange with exhaust gas in the upper part of the third flue and transmits the steam to the middle-stage superheater, and
the middle-stage superheater superheats steam through heat exchange with exhaust gas in the lower part the third flue or in the second flue and transmits the steam to the superheater including the plurality of double pipes.
